# EUROPÄISCHE PATENTANMELDUNG

(11) **EP 2 362 157 A1**
(43) Veröffentlichungstag der Anmeldung: **31.08.2011**
(21) Anmeldenummer: 10154031.8
(22) Anmeldetag: 18.02.2010
(51) Int. Cl.: F24J 2/26

(54) **Solarkollektor**

(71) Anmelder: go!nnovate AG, 9486 Schaanwald (LI); Sonderhoff Engineering GmbH, 6912 Hörbranz (AT)
(72) Erfinder: Goritschnig, Christian, 9486, Schaanwald (LI)
(74) Vertreter: Zenz

(57) **Zusammenfassung**

Ein Verfahren zur Herstellung eines ein Absorberelement (1) und ein Leitungssystem (2) umfassenden Solarkollektors, welches die Schritte aufweist: Auftragen eines mehrkomponentigen Klebemittels (3) auf zu verbindende Bereiche des Absorberelements (1) und/oder des Leitungssystems (2) mittels eines Mischkopfes; Anordnen des Absorberelements (1) und des Leitungssystems (2) in ihrer Zusammenbauposition derart, dass das Leitungssystem (2) auf dem Absorberelement (1) aufliegt und mit diesem in thermischem Kontakt steht; und Aushärten des Klebemittels (3) mittels berührungslosen Einbringens von Energie in das Klebemittel (3), so dass nach dem Aushärten das Absorberelement (1) und das Leitungssystem (2) wenigstens in Linien- und/oder Flächenberührung (4) stehen und mittels des neben der Linien- und/oder Flächenberührung (4) angeordneten Klebemittels (3) miteinander verbunden werden.

## Beschreibung

Die Erfindung richtet sich auf ein Verfahren zur Herstellung eines ein Absorberelement und ein Leitungssystem umfassenden Solarkollektors. Die Erfindung richtet sich ferner auf einen Solarkollektor zum Übertragen von Strahlungsenergie in ein Wärmetransportmedium, der ein plattenförmig ausgebildetes Absorberelement und ein rohrförmig ausgebildetes Leitungssystem für das Wärmetransportmedium aufweist.

Solarkollektoren oder Sonnenkollektoren sind in vielfältiger Gestaltung aus dem Stand der Technik bekannt und bezeichnen Vorrichtungen zur Sammlung der im Sonnenlicht enthaltenen Energie. Ein bekannter Solarkollektor einer ersten Bauart umfasst ein photovoltaisches Modul, das Sonnenstrahlung absorbiert und elektrische Energie liefert. Ein solcher Solarkollektor zur Gewinnung von elektrischer Energie in Photovoltaikanlagen wird als Solarmodul bezeichnet. Ein bekannter Solarkollektor einer zweiten Bauart liefert Wärmeenergie und wird als thermischer Solarkollektor bezeichnet. Die Energie der Sonnenstrahlung wird bei einem sogenannten thermischen Solarkollektor mit einem Absorber aufgenommen, in Wärmeenergie gewandelt und anschließend an ein Wärmetransportmedium abgegeben, das in thermischen Kontakt an dem Absorber entlang geführt wird oder fließt. Im Gegensatz zu einem Photovoltaik- bzw. Solarmodul, welches die Sonnenenergie in elektrische Energie umwandelt, wandelt ein thermischer Solarkollektor Strahlungsenergie der Sonne in Wärmeenergie um. Darüber hinaus existiert heutzutage eine dritte Bauart von Solarkollektoren, bei denen die Technologien der ersten und zweiten Bauart vereint sind, d.h. solche Solarkollektoren dienen sowohl der Wärme- als auch der Stormerzeugung. Die dritte Bauart wird auch als photovoltaischer thermischer Kollektor bezeichnet (PVT-Kollektor).

Bei den Solarkollektoren der zweiten und dritten Bauart wird die an das Wärmetransportmedium übertragene Wärme zusammen mit dem Wärmetransportmedium, welches als Fluid (also Flüssigkeit oder Gas) vorliegt, durch ein Leitungssystem in dem Solarkollektor geführt und dann beispielsweise in einen Wärmespeicher geleitet oder sofort als Prozesswärme in eine Wärmesenke geleitet. Die Wärme kann dem Wärmetransportmedium auf diesem Weg über Wärmetauscher entzogen werden, so dass das Fluid wieder zur Aufnahme dem Solarkollektor zugeführt werden kann.

Bei Solarkollektoren trifft die Sonnenstrahlung demnach auf das zur Strahlungsabsorption optimierte Absorberelement auf, wobei das Absorberelement dabei zusätzlich mit einer transparenten Abdeckung versehen sein kann. Die Elemente, welche das Leitungssystem bilden, sind thermisch mit dem Absorberelement gekoppelt. Derartige Leitungssysteme bestehen regelmäßig aus geeigneten Metalllegierungen, wie beispielweise Kupfer- oder Aluminiumlegierungen, und sind in Form einer mäanderförmigen oder harfenförmigen Rohrleitung ausgebildet.

Das Leitungssystem bzw. die Rohrleitung steht in thermischem Kontakt mit dem Absorberelement, so dass im Sonnenlicht enthaltene Strahlungsenergie aufgenommen, in das Wärmetransportmedium übertragen und zu einem Wärmetauscher transportiert werden kann. Die Qualität der Wärmeübertragung von Absorberelement auf das Wärmetransportmedium ist stark von der Güte der Verbindung von Absorberelement und Leitungssystem abhängig.

Zur Verbindung von Absorberelement und Leitungssystem sind aus dem Stand der Technik Klebeverfahren bekannt. Aufgrund des zwischen Leitungssystem und Absorberelement vorhandenen Klebemittels weisen Solarkollektoren mit dieser Verbindungstechnologie eine schlechte Wärmeübertragung zwischen dem Absorberelement und dem Leitungssystem auf. Ferner sind aus dem Stand der Technik Löt- und Ultraschallschweißverfahren bekannt, die einen besseren Wärmeübergang aufweisen. Nachteilig bei diesen Verbindungsverfahren ist jedoch, dass nur Absorberelemente und Leitungssysteme aus gleichen Werkstoffen miteinander verbunden werden können. Zwar ist es heutzutage möglich, mittels der Ultraschweißtechnologie auch unterschiedliche Werkstoffe miteinander zu verbinden. Zu diesem Zweck wird jedoch heutzutage bevorzugt die sogenannte Laserschweiß-Verbindungstechnologie eingesetzt. Die vorstehend genannten Löt- und Schweißverfahren weisen jedoch den Nachteil auf, dass hohe Temperaturen an den Verbindungsstellen zwischen Absorberelement und dem Leitungssystem erzeugt werden, wodurch die Gefahr besteht, dass insbesondere dünnwandige Absorberelemente und/oder dünnwandige Leitungssysteme beschädigt werden. Auch besteht die Gefahr, dass beim Verbinden aufgrund des Temperatureinflusses das Absorberelement und/oder das Leitungssystem dauerhaft und nachhaltig verformt werden und nach dem Verbinden unerwünschte mechanische Spannungen aufweisen.

Darüber hinaus stellen die Schweißverfahren aus energietechnischer und wirtschaftlicher Sicht recht teure und aufwendige Verbindungsverfahren dar. Das zeitaufwendige Verschweißen von Absorberelement und Leitungssystem erhöht die Taktzeiten der Serienfertigung, da alle sonstigen Herstellungsschritte eines Solarkollektors zügiger abgearbeitet werden.

Der vorliegenden Erfindung liegt die Aufgabe zugrunde, eine Lösung zu schaffen, die eine zuverlässige, hochfeste und einen guten Wärmeübergang aufweisende Verbindung zwischen Absorberelement und Leitungssystem bei gleichzeitig einfacher und kostengünstiger Herstellung bereitstellt.

Diese Aufgabe wird erfindungsgemäß gelöst durch ein Verfahren zur Herstellung eines ein Absorberelement und ein Leitungssystem umfassenden Solarkollektors, wobei das erfindungsgemäße Verfahren die Schritte aufweist:
● Auftragen eines mehrkomponentigen Klebemittels auf zu verbindende Bereiche des Absorberelements und/oder des Leitungssystems mittels eines Mischkopfes,
● Anordnen des Absorberelements und des Leitungssystems in ihrer Zusammenbauposition derart, dass das Leitungssystem auf dem Absorberelement aufliegt und mit diesem in thermischem Kontakt steht, und
● Aushärten des Klebemittels mittels berührungslosen Einbringens von Energie in das Klebemittel, so dass nach dem Aushärten das Absorberelement und das Leitungssystem wenigstens in Flächen- und/oder Linienberührung stehen und mittels des neben der Flächen- und/oder Linienberührung angeordneten Klebemittels miteinander verbunden werden.

Die vorstehend genannte Aufgabe wird erfindungsgemäß ebenso gelöst durch einen Solarkollektor zur Sammlung und Übertragung der im Sonnenlicht enthaltenen Strahlungsenergie in ein Wärmetransportmedium, der wenigstens ein Absorberelement und ein mit diesem in thermischen Kontakt stehendes Leitungssystem für das Wärmetransportmedium aufweist, wobei das Absorberelement und das Leitungssystem wenigstens in Flächen- und/oder Linienberührung stehen und eine Klebeverbindung das Absorberelement und das Leitungssystem elastisch bzw. flexibel miteinander verbindet. Die Klebeverbindung umfasst ein unter berührungsloser Energieeinbringung aushärtendes Zwei-Komponenten-Klebemittel, wobei der Solarkollektor mittels eines Verfahrens nach einem der Ansprüche 1 bis 8 hergestellt ist.

Vorteilhafte und zweckmäßige Ausgestaltungen und Weiterbildungen der Erfindung ergeben sich aus den entsprechenden Unteransprüchen.

Durch die Erfindung wird eine Möglichkeit bereitgestellt, mit welcher auf konstruktiv einfache Weise eine elastische Verbindung zwischen dem plattenförmigen Absorberelement und rohrförmigen Leitungssystem hergestellt wird. Der Grundgedanke der Erfindung besteht darin, das Leitungssystem mit einem wärmehärtenden Klebemittel auf dem Absorberelement stoffschlüssig zu befestigen, wobei die Verbindung gewährleistet, dass das Leitungssystem in Linien- und/oder Flächenberührung zu dem Absorberelement steht. Dadurch, dass das Leitungssystem in Linien- und/oder Flächenberührung mit dem Absorberelement steht, beeinflusst die Klebeverbindung nicht die Wärmeübertragung zwischen diesen beiden Bauteilen. Ferner weist die in Form der Klebeverbindung ausgebildete Verbindung bereits nach der Schnellaushärtung des Klebemittels eine ausreichende Druckscherfestigkeit auf, so dass der Solarkollektor unmittelbar nach der Schnellaushärtung weiter verarbeitet werden kann, ohne dass zwischen Absorberelement und Leitungssystem eine Relativbewegung stattfinden wird. In diesem Zusammenhang spricht man auch davon, dass die Klebeverbindung eine ausreichende Weiterbearbeitungsfestigkeit aufweist, d.h. die Klebeverbindung ist ausreichend stabil und scherfest für die Weiterbearbeitung des Solarkollektors. Aufgrund der Verwendung einer Klebeverbindung zwischen Absorberelement und Leitungssystem besteht keine Gefahr, dass Bauteile des Solarkollektors beim Fügen beschädigt werden. Eine schädliche Temperatureinwirkung auf die einzelnen Bauteile ist im Vergleich zum Löten und Schweißen nicht gegeben. Dies wirkt sich insbesondere bei Solarkollektoren der dritten Bauart (PVT-Kollektoren) positiv auf deren Wirkungsgrad aus. Beispielsweise wird durch das Laserschweißen die selektive Beschichtung des Absorberelements zerstört bzw. zumindest angegriffen, wodurch sich der Wirkungsgrad des gesamten Solarkollektors bzw. PVT-Kollektors verringert. Ein derartig nachteiliger Einfluss auf die selektive Beschichtung des Absorberelements wird aber gerade bei dem erfindungsgemäßen Verfahren vermieden, so dass insbesondere bei einem PVT-Kollektor mittels der Erfindung ein höherer Wirkungsgrad im Vergleich zum Laserschweißverfahren erzielt wird. Auch wirkt sich der durch das Verfahren vermiedene Temperatureinfluss auf die Verwendung von dünnwandigen Bauteilen positiv aus, bei denen es im Rahmen von Schweißverfahren immer wieder zu Beschädigungen der Bauteile infolge der dünnen Wandstärke kommt und die Bauteile aus diesem Grund mit einer höheren Materialstärke ausgebildet sind. Eine solche Überdimensionierung hinsichtlich der Materialstärke ist bei dem erfindungsgemäßen Verfahren nicht erforderlich, so dass eine Nutzung des erfindungsgemäßen Verfahrens auch eine gewisse Materialeinsparung nach sich zieht, wodurch die Herstellkosten eines Solarkollektors weiter gesenkt werden. Zudem wird durch das erfindungsgemäße Verfahren aufgrund der elastischen Verbindung ein Verzug der verbunden Bauteile ausgeschlossen, so dass beispielsweise das mit dem Leitungssystem verbundene Absorberelement ohne Überschreitung einzuhaltender Einbautoleranzen problemlos in einen Rahmen des Solarkollektors eingesetzt und eingebaut werden kann und keine Nachbearbeitung hinsichtlich etwaiger Kollektoranschlüsse erforderlich sind. Auch ist es nun mit Hilfe des erfindungsgemäßen Verfahrens möglich, unterschiedliche Werkstoffpaarungen für Absorberelement und Leitungssystem (beispielsweise eine Kombination von Stahlblech und Alurohrsystem) zu verwenden. Eine diesbezügliche Einschränkung besteht nicht. Darüber hinaus ist es aufgrund des erfindungsgemäßen Verfahrens in Verbindung mit der Schnellaushärtung möglich, auch dreidimensionale Konturen oder Körper herzustellen, was mittels der bekannten Schweißverfahren generell nicht möglich ist. Die mittels des erfindungsgemäßen Verfahrens hergestellte Klebeverbindung weist Haltbarkeits- und Festigkeitseigenschaften auf, die mit Eigenschaften von mittels eines Laserschweißverfahrens hergestellten Verbindungen zumindest vergleichbar sind. Insgesamt verringert sich im Vergleich zur Löt- oder Schweißtechnologie der Gesamtenergieverbrauch zur Herstellung eines Solarkollektors, was eine Reduzierung der Herstellkosten nach sich zieht. Unter Berücksichtigung umweltrelevanter Aspekte weist die Erfindung den Vorteil auf, dass durch gezielte erhöhte Temperatureinbringung in die Klebeverbindung das Absorberelement von dem Leitungssystem gelöst werden kann, so dass beide Bauteile einem Wiederverwertungsprozess zugeführt werden können, sollte der Solarkollektor das Ende seiner Lebens- oder Betriebszeit erreicht haben.

In Ausgestaltung des Verfahrens sieht die Erfindung vor, dass zum Aushärten des Klebemittels das Absorberelement und das Leitungssystem in einen von der Umgebung separierbaren Raum eingebracht werden, der Raum von der Umgebung separiert wird, die Temperatur im Inneren des Raumes auf 60°C bis 120°C erhöht wird und das Klebemittel bei dieser Temperatur für 60 bis 120 Sekunden ausgehärtet wird bzw. aushärtet. Durch diesen Verfahrensschritt härtet das Klebemittel und damit die Klebeverbindung zwischen Absorberelement und Leitungssystem innerhalb kürzester Zeit aus und erreicht eine Weiterbearbeitungsfestigkeit, die sich dadurch auszeichnet, dass unter dem Einfluss normaler Kräfte das Absorberelement und das Leitungssystem nicht mehr relativ zueinander bewegt werden können. Die Klebeverbindung weist nach dieser kurzen Zeitspanne eine Abzugsfestigkeit von ca. 200 N auf, d.h. Absorberelement und Leitungssystem halten beim Auseinanderziehen einer Kraft von etwa 200 N stand. Darüber hinaus sind während dieser Zeitspanne, d.h. nach der Schnellaushärtung, sämtliche Ausgasungsvorgänge des Klebemittels abgeschlossen. Im Vergleich zum Laserschweißverfahren, welches zur Verbindung von Absorberelement und Leitungssystem in etwa 140 Sekunden benötigt, wird durch das erfindungsgemäße Verbindungsverfahren ein im Wirkungsgrad vergleichbarer Solarkollektor geschaffen, so dass unter wirtschaftlichen Gesichtspunkten die Klebeverbindung einen Vorteil gegenüber den bekannten Schweiß-Technologien aufweist.

Eine alternative Art des berührungslosen Einbringens von Energie in das Klebemittel ist in erfindungsgemäßer Weiterbildung des Verfahrens dadurch vorgesehen, dass zum Aushärten des Klebemittels Wärme über das Leitungssystem mittels erzeugen eines Stromflusses in dem Leitungssystem auf das Klebemittel übertragen wird. Eine ausreichende Weiterbearbeitungsfestigkeit wird hierbei nach ca. 90 bis 180 Sekunden erreicht, wobei jedoch das Anlegen der Spannung sehr sorgsam erfolgen muss, um das Leitungssystem und damit das Klebemittel einheitlich zu erwärmen.

In alternativer Ausgestaltung des erfindungsgemäßen Verfahrens ist vorgesehen, dass zum Aushärten des Klebemittels das Klebemittel gezielt mittels einer Infrarot-Strahlung, insbesondere einer Nahinfrarot-Strahlung, belichtet wird. Dabei wird das Klebemittel unter einem bestimmten Winkel mittels einer Infrarot-Lichtquelle für eine gewisse Zeit, beispielsweise 75 bis 180 Sekunden, belichtet, um eine ausreichende Aushärtung und Festigkeit der Klebeverbindung zur Weiterbearbeitung des Solarkollektors zu erzielen.

Als einfachste Art des berührungslosen Einbringens von Energie in das Klebemittel sieht die Erfindung in alternativer Ausgestaltung des Verfahrens vor, dass das Aushärten des Klebemittels bei Raumtemperatur erfolgt. Allerdings ist für die Massenfertigung von Solarkollektoren bei dieser Art der Aushärtung ein großer Platzbedarf erforderlich, denn die erforderliche Weiterbearbeitungsfestigkeit der Klebeverbindung wird hierbei erst nach 10 bis 90 Minuten erreicht, so dass die verklebten Bauteile zur Aushärtung zunächst zwischengelagert werden müssen.

Besonders vorteilhaft ist es in weiterer Ausgestaltung des erfindungsgemäßen Verfahrens, wenn ein Zwei-Komponenten-Silikonkleber als Klebemittel verwendet wird. Als Zwei-Komponenten-Silikonkleber kommen beispielsweise PACTAN 8071 in einem Mischungsverhältnis von 1:1 oder Novosil VP 6431 von OTTO Chemie in einem Mischungsverhältnis von 100:14 in Betracht. Diese beiden Zwei-Komponenten-Silikonkleber zeichnen sich dadurch aus, dass ihre Verarbeitungsviskosität pastös ist. Darüber hinaus weisen beide Klebemittel eine gute Wärmeleitfähigkeit und außergewöhnlich hohe Haftungseigenschaften über einen hohen Temperaturbereich auf, wobei sie UV-beständig und nach der Schnellaushärtung ausgasungsfrei sind. Ferner zeichnen sich solche Zwei-Komponenten-Silikonkleber durch eine geringe Härte und hohe Bruchdehnung aus. Dank ihrer über einen weiten Temperaturbereich gleich bleibenden physikalischen Eigenschaften können Zwei-Komponenten-Silikonkleber überall dort eingesetzt werden, wo Materialien mit unterschiedlichen Ausdehnungskoeffizienten verbunden werden müssen. Angemerkt sei, dass bei Ein-Komponenten-Klebern, die beispielsweise Epoxide aufweisen, mit hohem Verschleiß der Dosierpumpen und Dosierventile gerechnet werden muss. Dieser Nachteil besteht bei dem erfindungsgemäß vorgesehenen Zwei-Komponenten-Silikonkleber nicht.

Um die Verklebungsfestigkeit der zu verklebenden Bauteile zu verbessern ist in Weiterbildung des Verfahrens vorgesehen, dass vor dem Auftragen des Klebmittels ein Haftvermittler auf zu verbindende Bereiche des Leitungssystems und/oder des Absorberelements aufgebracht werden/wird. Bei schlecht verklebbaren Werkstoffen von Absorberelement und Leitungssystem schafft ein Haftvermittler eine Haftbrücke zwischen den Werkstoffen und dem Klebemittel.

Schließlich sieht die Erfindung in weiterer Ausgestaltung des Verfahrens vor, dass vor dem Auftragen des Klebemittels die zu verbindenden Bereiche von Absorberelement und Leitungssystem, vorzugsweise mittels eines Plasmaverfahrens oder Plasma-Plus-Verfahrens, gereinigt werden. Insbesondere gibt es bei der Anwendung eines Plasmaverfahrens kaum Beschränkungen hinsichtlich des zu reinigenden Materials, so dass temperaturempfindliche Kunststoffe sowie Metall, Glas und Keramik behandelt werden können. Beim Plasma-Plus-Verfahren wird zusätzlich eine Schicht aufgebracht, wodurch die im weiteren Verlauf des Verfahrens gewünschte Haftung verbessert wird. Allerdings muss beachtet werden, dass das Plasmaverfahren und das Plasma-Plus-Verfahren auf jeden Fall der jeweiligen Aufgabe sowie dem Material angepasst werden müssen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 eine exemplarische Darstellung von Absorberelement und Leitungssystem vor deren Verbindung miteinander und
Figur 2 eine exemplarische Darstellung von Absorberelement und Leitungssystem nach deren Verbindung miteinander.

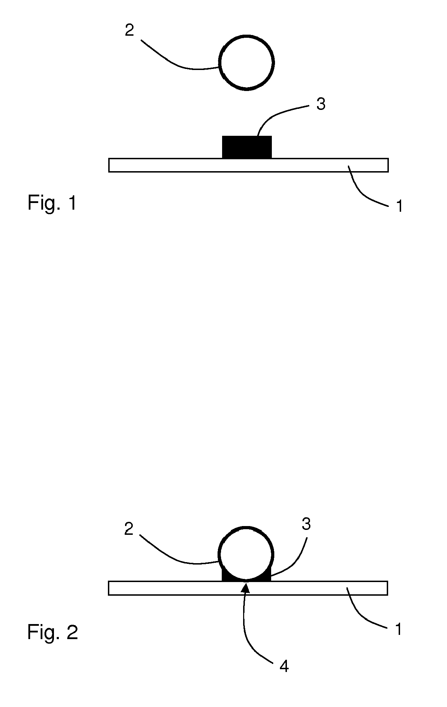

Ein Solarkollektor dient üblicherweise der Sammlung und Übertragung der im Sonnenlicht enthaltenen Strahlungsenergie in ein Wärmetransportmedium. Ein solcher Solarkollektor ist ausschnittsweise und schematisch in den Figuren 1 und 2 dargestellt und umfasst wenigstens ein plattenförmig ausgebildetes Absorberelement 1, welches selektiv beschichtet sein und aus Metall bestehen kann, und ein mit diesem in thermischen Kontakt stehendes, rohrförmig ausgebildetes Leitungssystem 2 für das Wärmetransportmedium. Gemäß der Erfindung ist unter der Bezeichnung Absorberelement sowohl ein plattenförmiges Element als auch schmale Blechstreifen (sogenannte Absorberfinnen) zu verstehen, die mit dem Leitungssystem 2 verbunden werden. Das Leitungssystem 2 ist eine mäanderförmig oder harfenförmig ausgebildete Rohrleitung, wobei auch andere Ausgestaltungen und Formgebungen des Leitungssystems 2 denkbar sind. Auch die Verwendung von im Querschnitt mehreckigen Rohrleitungen anstelle von kreisförmigen Querschnitten ist denkbar.

Das Absorberelement 1 und das Leitungssystem 2 sind erfindungsgemäß mittels eines eine Klebeverbindung bildenden Klebemittels 3 miteinander verbunden. Da jedoch fast jede Oberfläche während verschiedener Arbeitsgänge im Herstellungsprozess verschmutzt wird, sollten oder müssen beispielsweise vor dem Auftragen des Klebemittels, d.h. vor weiteren Arbeitsgängen, die Oberflächen der Bauteile gereinigt werden. Eine Plasmareinigung ist ein Weg um absolut saubere, fettfreie Oberflächen zu erhalten. Bevor also das Klebemittel 3 auf zu verbindende Bereich des Absorberelements 1 und/oder des Leitungssystems 2 aufgebracht bzw. aufgetragen wird, werden die zu verbindenden Bereiche gereinigt, beispielsweise mittels eines Plasmaverfahrens, was die Oberflächen unter anderem hochgradig entfettet. Bei der Plasmareinigung gibt es bezüglich des zu reinigenden Materials/Werkstoffes kaum Beschränkungen. So können temperaturempfindliche Kunststoffe ebenso behandelt werden wie Metall, Glas und Keramik. Das Plasmaverfahren muss aber auf jeden Fall der jeweiligen Aufgabe angepasst werden. Alternativ kann auch eine chemische Vorbehandlung zum Reinigen der zu verbindenden Bereiche angewandt werden, wie beispielsweise eine Lösemittel-Dampfentfernung.

Nach dem Reinigungsschritt kann optional ein Verfahrensschritt zum Auftragen eines Haftvermittlers auf die zu verbindenden Bereiche des Absorberelements 1 und/oder des Leitungssystems 2 vorgesehen sein. Dies ist immer dann erforderlich, wenn verschiedenartige Werkstoffe miteinander verklebt werden müssen oder wenn ein bestimmtes Klebemittel wegen seiner besonderen Eigenschaften eingesetzt werden soll, das Klebemittel aber auf einem der beiden Klebepartner nicht ausreichend gut haftet.

Nach dem Reinigungsschritt und dem optionalen Auftragungsschritt eines Haftvermittlers wird das mehrkomponentige Klebemittel 3 auf die zu verbindenden Bereiche des Absorberelements 1 aufgetragen. Das Auftragen erfolgt vorzugsweise automatisiert. Erfindungsgemäß wird ein Zwei-Komponenten-Silikonkleber als Klebemittel 3 verwendet, der eine gute Wärmeleitfähigkeit und außergewöhnlich hohe Haftungseigenschaften über einen hohen Temperaturbereich aufweist. Ferner ist dieses Klebemittel 3 UV-beständig und nach der Schnellaushärtung ausgasungsfrei. Als beispielhafte Zwei-Komponenten-Silikonkleber seien hier lediglich PACTAN 8071 und Novosil VP 6431 von OTTO Chemie genannt. Die beiden Komponenten (Kleber und Härter) des Klebemittels 3 liegen in flüssiger bis pastöser Form vor und müssen vor dem Auftragen in einem bestimmten Mischungsverhältnis miteinander vermischt werden, wobei das Mischungsverhältnis von Kleber und Härter üblicherweise zwischen 100:15 bis 100:30 Gewichtsteilen, in Einzelfällen auch bei 1:1 Volumenanteilen liegt. Bei den vorstehend genannten Klebemitteln 3 wird PACTAN 8071 in einem Mischungsverhältnis von 1:1 und Novosil VP 6431 in einem Mischungsverhältnis von 100:14 verwendet. Das Vermischen der zwei Komponenten und das anschließende Auftragen des Zwei-Komponenten-Silikonklebers erfolgt in einem vollautomatisierten Verfahrensschritt, wobei beispielsweise eine statische, statisch-dynamische oder dynamische Mischeinheit mit Dosierpumpe und Mischkopf das Klebemittel 3 in vorgegebener Menge und in vorgegebenem Mischungsverhältnis auf das Absorberelement 1 oder auf das Leitungssystem 2 oder sowohl auf Absorberelement 1 als auch Leitungssystem 2 aufträgt. Durch automatisiertes Auftragen des Klebemittels 3 wird eine maßgenaue Aufbringung des Klebemittels 3, d.h. eine vorbestimmte Menge auf einen vorbestimmten Bereich, gewährleistet.

Im Anschluss an das Auftragen des mehrkomponentigen Klebemittels 3 werden die zu verbindenden Bauteile des Solarkollektors, d.h. das Absorberelement 1 und das Leitungssystem 2, in ihrer Zusammenbauposition angeordnet bzw. positioniert. Hierzu wird das Absorberelement 1 mittels eines Vakuumspanntisches gehalten bzw. fixiert, was allerdings auch schon vor dem Auftragen des Klebemittels 3 erfolgen kann. Das Leitungssystem 2 wird dann beispielsweise im Rahmen eines automatisierten Verfahrensschrittes von einer Robotereinheit zu dem auf dem Vakuumtisch fixierten Absorberelement 1 transportiert. Anschließend werden dann das Absorberelement 1 und das Leitungssystem 2 beispielsweise durch Klammern oder anderen mechanischen Befestigungsmitteln zeitweilig lösbar fixiert. Dabei kann das Anordnen bzw. Fügen der beiden Teile zueinander in einem automatisierten Verfahrensschritt erfolgen. Dieser automatisierte Schritt umfasst, dass das Leitungssystem 2 und das Absorberelement 1 derart gegeneinander gedrückt werden, dass das Leitungssystem direkt auf dem Absorberelement aufliegt und mit diesem sowohl vollständig in Linienberührung 4 als auch vollständig in thermischem Kontakt steht. Diese Anordnung beider Bauteile, bei welcher sie in Linienberührung 4 stehen, entspricht der Zusammenbauposition. Anschließend können dann Befestigungsmittel manuell oder automatisch zum Anordnen und lösbaren Fixieren des Absorberelements 1 und des Leitungssystems 2 in der Zusammenbauposition angebracht werden, so dass ein teilautomatisierter Verfahrensschritt vorliegt. Bis zur Aushärtung der Klebeverbindung, d.h. bis zu einer ausreichenden Festigkeit zur Weiterverarbeitbarkeit, bleiben das Absorberelement 1 und das Leitungssystem 2 fixiert, wobei ein geringer Fixierdruck ausreicht.

Nach dem Fügen der zu verbindenden Bauteile (Absorberelement 1 und Leitungssystem 2) erfolgt das Aushärten des Klebemittels 3 mittels berührungslosen Einbringens von Energie in das Klebemittel 3, so dass nach dem Aushärten das Absorberelement 1 und das Leitungssystem 2 in Linienberührung 4 stehen und mittels des neben der Linienberührung 4 angeordneten Klebemittels 3 (siehe Figur 2) miteinander verbunden werden. Mittels der Linienberührung 4 liegt ein Abschnitt der Außenwandung des im Querschnitt kreisförmigen Leitungssystems 2 direkt und spaltfrei auf dem Absorberelement 1 auf. Bei beispielsweise viereckigen Leitungssystemen würde eine Flächenberührung zwischen der Außenwandung des Leitungssystems und des Absorberelements 1 vorliegen.

Im Anschluss an das Fügen der zu verbindenden Bauteile erfolgt ein thermischer Aushärtungsvorgang. Entsprechend eines bevorzugten Verfahrensschrittes werden zum Aushärten des Klebemittels das Absorberelement 1 und das Leitungssystem 2 in einen von der Umgebung separierbaren Raum eingebracht. Dieser Raum ist an die äußeren Abmessungen der zu verbindenden Bauteile angepasst und weist eine Vielzahl von Heißluftdüsen auf, durch die ein heißer bzw. erwärmter Luftstrom direkt und gezielt auf das mehrkomponentige Klebemittel 3 bzw. die Klebeverbindung gerichtet werden kann. Zur Aushärtung wird der Raum von der Umgebung separiert, wobei sich insgesamt die Temperatur im Inneren des Raumes auf 60°C bis 120°C erhöht. Dabei werden die Düsen auf die Klebeverbindung gerichtet bzw. nur Düsen mit Heißluft beaufschlagt, deren Luftstrom auf die Klebeverbindung trifft. Innerhalb einer Taktzeit von etwa 60 bis 120 Sekunden härtet das mehrkomponentige Klebemittel 3 bei einer Temperatur zwischen 60°C und 120°C dann aus. Es erfolgt eine Temperaturüberwachung mittels geeigneter Sensorik, so dass gewährleistet ist, dass das Klebemittel 3 bzw. die Silikonmasse nicht beschädigt wird. Das berührungslose Einbringen von Energie in das mehrkomponentige Klebemittel 3 bewirkt eine beschleunigte Reaktion der Silikonmasse und begünstigt eine schnelle Aushärtung bzw. Schnellaushärtung des mehrkomponentigen Klebemittels 3, so dass in relativ kurzer Zeit die Klebeverbindung zwischen Absorberelement 1 und Leitungssystem 2 eine Mindestfestigkeit bzw. Weiterverarbeitungsfestigkeit aufweist.

Ein alternativer Verfahrensschritt zum berührungslosen Einbringen von Energie in das mehrkomponentige Klebemittel 3 kann über das Leitungssystem ohne Einbringung der zu verbindenden Bauteile in einen von der Umgebung separierten Raum erfolgen. Hierbei wird zum Aushärten des Klebemittels 3 Wärme über das Leitungssystem mittels erzeugen eines Stromflusses in dem Leitungssystem auf das Klebemittel übertragen, wobei nach einer Taktzeit von ca. 80 bis 180 Sekunden eine ausreichende Weiterverarbeitungsfestigkeit erreicht wird. Als weitere Alternative ist es aber auch denkbar, zum Aushärten des Klebemittels 3 das Klebemittel 3 gezielt mittels einer Infrarot-Strahlung, insbesondere einer Nahinfrarot-Strahlung, zu belichten. Bei diesem Schritt wird eine erforderliche Weiterverarbeitungsfestigkeit nach einer Taktzeit von etwa 75 bis 180 Sekunden erreicht. Selbstverständlich kann die Klebeverbindung zwischen Absorberelement 1 und Leitungssystem 2 auch bei Raumtemperatur aushärten, wobei dann die erforderliche Weiterverarbeitungsfestigkeit nach einer Taktzeit von etwa 10 bis 90 Minuten erreicht wird.

Ein speziell vorgesehener Schritt des Abkühlens ist bei dieser Art der Klebeverbindung mittels des mehrkomponentigen Klebemittels 3 infolge der beschleunigten Aushärtungs-Reaktion nicht erforderlich.

Nach dem Aushärten können dann die Haltevorrichtungen und zuvor angebrachte mechanische Fixiereinrichtungen gelöst und/oder entfernt werden, bevor das Absorberelement 1 und das mit diesem verbundene Leitungssystem 2 weiteren Bearbeitungsschritten zugeführt werden. Das Absorberelement 1 und das Leitungssystem 2 stehen nach der schnellen Aushärtung mittels der Klebeverbindung im Fall des kreisrohrförmig ausgebildeten Leitungssystems 2 in Linienberührung 4, d.h. ein Abschnitt der Außenwandung des Leitungssystems 2 liegt direkt und spaltfrei auf dem Absorberelement 1 auf. Die ein unter berührungsloser Energieeinbringung aushärtendes Zwei-Komponenten-Klebemittel umfassende Klebeverbindung verbindet das Absorberelement 1 und das Leitungssystem 2 elastisch miteinander, so dass Werkstoffausdehnungen von Absorberelement 1 und/oder Leitungssystem 2 aufgrund von starken Temperaturänderungen durch die elastische Klebeverbindung ausgeglichen werden können. Durch diese Klebeverbindung wird eine gleichmäßige Spannungsverteilung über den gesamten Fügebereich von Absorberelement 1 und Leitungssystem 2 und der Ausgleich unterschiedlicher Ausdehnungskoeffizienten von Absorberelement 1 und Leitungssystem 2 gewährleistet.

Zusammenfassend können erfindungsgemäß Solarkollektoren mit einer Klebeverbindung zwischen Absorberelement und Leitungssystem geschaffen werden, die einen mit geschweißten Absorbern vergleichbaren oder besseren Wirkungsgrad bei gleichzeitig niedrigeren Herstellungskosten aufweisen. Im Gegensatz zu geschweißten Absorbern bietet die Erfindung darüber hinaus den Vorteil, dass diese Verbindung keinen mechanischen Spannungsänderungen (beispielsweise aufgrund von starken Temperaturänderungen) unterliegt, sondern vielmehr die elastische bzw. flexible Klebeverbindung allzeit die für den Wirkungsgrad des Solarkollektors bedeutende Linienberührung 4 von Absorberelement und Leitungssystem gewährleistet. Darüber hinaus besteht bei dem Verfahren zu keiner Zeit die Gefahr einer Beschädigung der beispielsweise selektiv beschichteten Oberfläche des Absorberelements.

Im Hinblick auf umweltrelevante Gesichtspunkte sei erwähnt, dass sich bei einer Temperatureinbringung von mehr als 450°C das mehrkomponentige Klebemittel in seine Bestandteile (beispielsweise Silizium) zersetzt und die Klebeverbindung zwischen Absorberelement und Leitungssystem gelöst ist. Auf in dieser Hinsicht weist die Erfindung Vorteile gegenüber einem Laserschweißverfahren auf, denn die Verbindungen des Laserschweißens stellen Legierungen dar, die es aufwendig zu lösen und anschließend zu entsorgen gilt. Demgegenüber können die Bauteile des erfindungsgemäßen Solarkollektors wiederverwendet werden.

Der Fachmann wird erkennen, dass das vorstehend beschriebene Verfahren nicht nur dazu geeignet ist, ein Absorberelement und ein Leitungssystem miteinander zu verbinden. Die Klebeverbindung mit Schnellaushärtung ist ebenso dazu geeignet, andere Verbindungen des Solarkollektors, wie beispielsweise die Verbindung von Kollektorrahmen und Glasabdeckung oder von Kollektorrahmen und Rückwand, mit hoher Zuverlässigkeit zu realisieren, wobei das erfindungsgemäße Verfahren auch für solche Verbindungen an die Taktzeiten der Serienfertigung angepasst werden kann.

## Patentansprüche

1. Verfahren zur Herstellung eines ein Absorberelement (1) und ein Leitungssystem (2) umfassenden Solarkollektors, die Schritte aufweisend:
● Auftragen eines mehrkomponentigen Klebemittels (3) auf zu verbindende Bereiche des Absorberelements (1) und/oder des Leitungssystems (2) mittels eines Mischkopfes,
● Anordnen des Absorberelements (1) und des Leitungssystems (2) in ihrer Zusammenbauposition derart, dass das Leitungssystem (2) auf dem Absorberelement (1) aufliegt und mit diesem in thermischem Kontakt steht, und
● Aushärten des Klebemittels (3) mittels berührungslosen Einbringens von Energie in das Klebemittel (3), so dass nach dem Aushärten das Absorberelement (1) und das Leitungssystem (2) wenigstens in Flächen- und/oder Linienberührung (4) stehen und mittels des neben der Flächen- und/oder Linienberührung (4) angeordneten Klebemittels (3) miteinander verbunden werden.

2. Verfahren nach Anspruch 1, wobei zum Aushärten des Klebemittels (3) das Absorberelement (1) und das Leitungssystem (2) in einen von der Umgebung separierbaren Raum eingebracht werden, der Raum von der Umgebung separiert wird, die Temperatur im Inneren des Raumes auf 60°C bis 120°C erhöht wird und das Klebemittel bei dieser Temperatur für 60 bis 120 Sekunden ausgehärtet wird.

3. Verfahren nach Anspruch 1, wobei zum Aushärten des Klebemittels (3) Wärme über das Leitungssystem (2) mittels erzeugen eines Stromflusses in dem Leitungssystem (2) auf das Klebemittel übertragen wird.

4. Verfahren nach Anspruch 1, wobei zum Aushärten des Klebemittels (3) das Klebemittel (3) gezielt mittels einer Infrarot-Strahlung, insbesondere einer Nahinfrarot-Strahlung, belichtet wird.

5. Verfahren nach Anspruch 1, wobei das Aushärten des Klebemittels (3) bei Raumtemperatur erfolgt.

6. Verfahren nach einem der vorhergehenden Ansprüche, wobei ein Zwei-Komponenten-Silikonkleber als Klebemittel (3) verwendet wird.

7. Verfahren nach einem der vorhergehenden Ansprüche, wobei vor dem Auftragen des Klebmittels (3) ein Haftvermittler auf zu verbindende Bereiche des Leitungssystems (2) und/oder des Absorberelements (1) aufgebracht werden/wird.

8. Verfahren nach einem der vorhergehenden Ansprüche, wobei vor dem Auftragen des Klebemittels (3) die zu verbindenden Bereiche von Absorberelement (1) und Leitungssystem (2), vorzugsweise mittels eines Plasmaverfahrens, gereinigt werden.

9. Solarkollektor zur Sammlung und Übertragung der im Sonnenlicht enthaltenen Strahlungsenergie in ein Wärmetransportmedium, der wenigstens ein Absorberelement (1) und ein mit diesem in thermischen Kontakt stehendes Leitungssystem (2) für das Wärmetransportmedium aufweist, wobei das Absorberelement (1) und das Leitungssystem (2) wenigstens in Linien- und/oder Flächenberührung (4) stehen und eine Klebeverbindung das Absorberelement (1) und das Leitungssystem (2) elastisch miteinander verbindet, und wobei die Klebeverbindung ein unter berührungsloser Energieeinbringung aushärtendes Zwei-Komponenten-Klebemittel (3) umfasst, wobei der Solarkollektor mittels eines Verfahrens nach einem der Ansprüche 1 bis 8 hergestellt ist.
